# FASCICULE DE BREVET EUROPEEN

(11) **EP 3 900 484 B1**
(45) Date de publication et mention de la délivrance du brevet: **02.08.2023**
(21) Numéro de dépôt: 19868222.1
(22) Date de dépôt: 06.12.2019
(51) Int. Cl.: H05B 3/48, B60H 1/22, F24H 1/00, F24H 1/10

(54) **CORPS DE CHAUFFE POUR DISPOSITIF DE CHAUFFAGE ELECTRIQUE ET DE CIRCULATION D'UN LIQUIDE**
HEIZKÖRPER FÜR EINE VORRICHTUNG ZUR ELEKTRISCHEN ERHITZUNG UND UMWÄLZUNG EINER FLÜSSIGKEIT
HEATING BODY FOR A DEVICE FOR ELECTRICALLY HEATING AND CIRCULATING A LIQUID

(30) Priorité: 18.12.2018 FR 1873128
(43) Date de publication de la demande: 27.10.2021
(73) Titulaire: VALEO SYSTEMES THERMIQUES, 78320 Le Mesnil Saint-Denis (FR)
(72) Inventeur: FAIVRE, Arnaud, 78320 LE MESNIL SAINT-DENIS (FR); DAOU, Hocine, 78320 LE MESNIL SAINT-DENIS (FR); DECOOL, Laurent, 78320 LE MESNIL SAINT-DENIS (FR)
(74) Mandataire: Valeo Systèmes Thermiques
(86) Numéro de dépôt international: PCT/FR2019/052952
(87) Numéro de publication internationale: WO 2020/128210

(56) Documents cités:
- WO-A1-99/04210
- GB-A- 2 512 354
- GB-A- 2 537 715
- US-A1- 2005 051 531

## Description

Le domaine de la présente invention est celui des dispositifs électriques de chauffage et de circulation d'un liquide, notamment pour une installation de ventilation, de chauffage et/ou de climatisation d'un habitacle d'un véhicule automobile. Plus particulièrement, l'invention porte sur les dispositifs de chauffage électrique utilisés pour de telles installations dans des véhicules automobiles, électriques ou hybrides, équipés d'un réseau d'alimentation électrique à haute tension.

Le chauffage de l'air destiné au traitement thermique de l'habitacle d'un véhicule automobile à moteur thermique est assuré par échange de chaleur entre un flux d'air et un liquide caloporteur, par le biais d'un échangeur thermique. Dans le cas des véhicules hybrides ou électriques, on connait des dispositifs de chauffage électrique qui forment une source de calories et dans lesquels on fait circuler un courant électrique pour monter en température un élément chauffant embarqué dans ce dispositif de chauffage. Le liquide à chauffer traverse ainsi le dispositif de chauffage et est mis au contact de l'élément chauffant, il s'effectue alors un échange de calories entre l'élément chauffant et le liquide destiné au chauffage de l'habitacle, qui chauffe alors à son tour.

GB2537715A divulgue un corps de chauffe selon le préambule de la revendication 1.

L'élément chauffant consiste habituellement en des moyens électriques de chauffe, par exemple une ou plusieurs résistances chauffantes. Afin d'obtenir une puissance de chauffe suffisante pour le fonctionnement souhaité, on peut être amené à multiplier les éléments chauffants dans un même dispositif de chauffage électrique. De façon connue, ces éléments chauffants peuvent ainsi être alignés l'un après l'autre.

Un tel agencement a néanmoins pour inconvénient de créer un encombrement important en raison de la longueur du dispositif de chauffage électrique, en particulier lorsque le nombre d'éléments chauffants vient à augmenter afin d'atteindre les niveaux requis de performance.

La limitation de l'encombrement engendré par les éléments chauffants, tout en assurant des degrés de puissance et de performances toujours plus élevés, restent des problématiques essentielles pour les véhicules, notamment les véhicules automobiles électriques ou hybrides, et c'est dans ce contexte que s'inscrit l'invention.

La présente invention a ainsi pour but de proposer un corps de chauffe dont la puissance peut être augmentée, de par l'ajout d'éléments chauffant tout en limitant l'encombrement engendré par l'addition de tels éléments chauffants.

L'objet de la présente invention concerne un corps de chauffe pour dispositif de chauffage électrique de liquide, ledit corps de chauffe comprenant au moins un premier élément chauffant de forme hélicoïdale et défini par un diamètre, appelé premier diamètre, un deuxième élément chauffant de forme hélicoïdale défini par un diamètre, appelé deuxième diamètre, et un socle, porteur du premier élément chauffant et du deuxième élément chauffant, premier diamètre étant supérieur au deuxième diamètre et le premier élément chauffant étant disposé autour du deuxième élément chauffant, le premier élément chauffant et/ou le deuxième élément chauffant comprenant une première section terminale, suivie de la portion enroulée, suivie d'une deuxième section terminale rectiligne, la première section terminale et la deuxième section terminale s'étendant entre la portion enroulée et le socle, la deuxième section terminale d'au moins un des éléments chauffants s'étendant vers le socle à l'intérieur de la portion enroulée d'au moins un élément chauffant.

Un tel corps de chauffe est destiné à un dispositif de chauffage électrique pour véhicule automobile hybride ou électrique et est, en particulier, conçu pour opérer avec une alimentation électrique dite de haute tension, généralement supérieures à 50V. Par élément chauffant on entend par exemple une ou plusieurs résistances électriques qui pourront être montées électriquement en série ou en parallèle.

Selon un mode de réalisation particulier, le socle est muni d'orifices permettant l'insertion et la fixation, de manière étanche, des différents éléments chauffants. En particulier, afin de prévenir la déformation du socle, porteur des différents éléments chauffants, lesdits éléments comprennent une zone non chauffante, située au niveau de leurs sièges d'insertion dans le socle.

Selon un mode de réalisation particulier, chaque élément chauffant est un élément tubulaire hélicoïdal. Le tube de ces éléments chauffants forme ainsi, au niveau d'une portion enroulée, une hélice de diamètre spécifique, définissant l'élément chauffant.

En particulier, les éléments chauffants sont agencés de sorte que leur portion enroulée s'étend en s'enroulant autour d'un axe, dit axe d'enroulement, qui lui est propre. En particulier, les points d'un élément tubulaire hélicoïdal les plus éloignés de l'axe d'enroulement s'inscrivent dans une surface extérieure de la portion enroulée de l'élément chauffant. De la même manière, les points d'un élément tubulaire hélicoïdal les plus proches de l'axe d'enroulement s'inscrivent dans une surface intérieure de la portion enroulée de l'élément chauffant. Selon une caractéristique préférentielle de la présente invention, les différents éléments chauffants sont disposés de manière à ce que l'axe d'enroulement du premier élément chauffant soit confondu avec l'axe d'enroulement du deuxième élément chauffant. Le diamètre des éléments chauffants est ainsi égal au diamètre d'un disque s'étendant entre les surfaces extérieures de la portion enroulée de l'élément chauffant, mesuré dans un plan orthogonal à l'axe d'enroulement. Chaque section terminale traverse le socle et comprend, à son extrémité libre, une cosse permettant le raccord de l'élément chauffant au système électrique.

L'utilisation d'éléments chauffants de forme hélicoïdale permet une réduction de l'encombrement ainsi qu'une augmentation de la perturbation du fluide traversant le dispositif de chauffage électrique, augmentant de ce fait les performances dudit dispositif.

L'agencement des différents éléments chauffants de la présente invention contribue aussi à prévenir l'augmentation de l'encombrement qui résulterait du simple ajout des éléments chauffants bout à bout, sur un même axe, tel que cela a pu être observé dans l'art antérieur. Selon la présente invention, le corps de chauffe comprend au moins deux éléments chauffants disposés de manière à ce que le premier élément chauffant s'enroule autour du deuxième élément chauffant, limitant ainsi l'encombrement du corps de chauffe. Ces éléments chauffants, distincts, n'entrent de préférence néanmoins pas en contact les uns avec les autres, que ce soit au niveau de leurs sections terminales propres ou de leurs portions enroulées respectives, qui restent séparées l'une de l'autre.

Lorsque le dispositif de chauffage électrique comprenant le corps de chauffe de la présente invention est assemblé, un boitier vient se fixer sur le socle, délimitant ainsi une chambre dans laquelle s'étendent les différents éléments chauffants composant le corps de chauffe de la présente invention. De préférence, le corps de chauffe est agencé de sorte que les points de la surface extérieure de la portion enroulée de chaque élément chauffant soit environ équidistants d'une surface intérieure du boitier.

On définit de la sorte un espace de circulation d'un liquide dans la chambre, autour des éléments chauffants, un tel espace étant régulier d'un bout à l'autre de la chambre, permettant ainsi une bonne répartition des volumes de liquide. Le liquide, tel que de l'eau glycolée, destiné à être chauffé par les éléments chauffants du corps de chauffe, circule ainsi dans la chambre, entre les différents éléments chauffants et, par contact avec les éléments chauffants, va monter en température.

De façon similaire, les différents éléments chauffants pourront, par exemple, être agencés de sorte que l'axe d'enroulement du premier élément chauffant soit confondu avec l'axe d'enroulement du deuxième élément chauffant, de sorte que la portion enroulée du deuxième élément chauffant soit centrée à l'intérieur de la portion enroulée du premier élément chauffant. De cette manière, il est possible d'assurer une circulation de flux de liquide de volumes similaires tout autour des éléments chauffants, et en particulier dans l'espace existant entre la surface extérieure de la portion enroulée du deuxième élément chauffant et la surface intérieure de la portion enroulée du premier élément chauffant, cet espace délimitant une zone annulaire intermédiaire.

Afin d'adapter le dispositif de chauffage électrique à différentes puissances requises, le corps de chauffe pourra être configuré de manière à comprendre trois éléments chauffants, ou plus, selon la puissance désirée.

Lorsque le corps de chauffe comprend un troisième élément chauffant, lui aussi tubulaire et de forme hélicoïdale, ledit troisième élément chauffant est défini par un diamètre, appelé troisième diamètre.

Dans une telle configuration, le corps de chauffe pourra se présenter sous différents modes de réalisation.

Dans un premier mode de réalisation, le corps de chauffe est disposé de sorte que le premier élément chauffant est disposé autour du troisième élément chauffant. Le premier élément chauffant, de diamètre supérieur, est ainsi agencé de manière à s'enrouler autour du deuxième et du troisième élément chauffant.

Additionnellement le troisième élément chauffant peut être disposé dans le prolongement axial du deuxième élément chauffant, le deuxième élément chauffant et le troisième élément chauffant s'enroulant autour d'un axe d'enroulement commun. De préférence, le deuxième et le troisième élément chauffant, ainsi mis bout à bout, sont de diamètre identique. Le premier élément chauffant s'étend alors, de préférence, sur une hauteur égale, ou sensiblement égale, à la hauteur de l'ensemble formé par les deuxième et troisième éléments chauffants. Cette hauteur est égale à la distance mesurée entre le socle, dans lequel sont fixés les éléments chauffants, et l'extrémité opposée du corps de chauffe, selon l'axe d'enroulement des différents éléments chauffants.

L'ensemble formé par le deuxième et le troisième élément chauffant pourra, par exemple, être agencé de sorte que les axes d'enroulement de chaque élément chauffant soient confondus. Ainsi l'ensemble deuxième-troisième élément chauffant est centré sur la portion enroulée du premier élément de manière à assurer une circulation de flux de liquide de volumes similaires autour des éléments chauffants.

Dans un deuxième mode de réalisation, le corps de chauffe comprend au moins un troisième élément chauffant, de forme hélicoïdale et défini par un diamètre, appelé troisième diamètre, le premier élément chauffant et le troisième élément chauffant étant disposés autour du deuxième élément chauffant.

Ainsi le troisième élément chauffant est d'un diamètre similaire à celui du premier élément chauffant et est disposé de sorte que le premier et le troisième élément chauffant soient bout à bout et s'enroulent autour d'un axe commun. Dans un tel mode, le premier et le troisième élément chauffant entourent le deuxième élément chauffant, le diamètre du deuxième élément chauffant est donc inférieur au diamètre du premier élément chauffant et du troisième élément chauffant.

Le deuxième élément chauffant s'étend alors, de préférence, sur une hauteur égale, ou sensiblement égale, à la hauteur de l'ensemble formé par le premier et le troisième élément chauffant. A nouveau, le deuxième élément chauffant pourra, par exemple, être agencé de sorte que l'axe d'enroulement de l'ensemble formé par le premier et le troisième élément chauffant soit confondu avec l'axe d'enroulement du deuxième élément chauffant.

Le pas de la portion enroulée de chaque élément chauffant, c'est-à-dire la distance séparant chaque spire, mesurée par rapport à l'axe d'enroulement, pourra être adapté selon l'élément chauffant, le mode de réalisation, et la puissance désirée. Lorsque deux éléments chauffants sont agencés bout à bout, les hélices de leurs portions enroulées respectives tendront à présenter un pas faible, de manière à limiter leur encombrement.

La hauteur d'un tel ensemble d'éléments chauffants, mis bout à bout, sera mesurée selon l'axe d'enroulement de l'un des éléments chauffants. Cette hauteur est égale, ou sensiblement égale, à la somme de la hauteur des différentes portions enroulées de ces différents éléments chauffants ajoutée de la longueur d'une première section terminale joignant l'extrémité de la portion enroulée la plus proche du socle au socle.

Un élément chauffant, dit allongé, peut être disposé soit de manière à enrouler deux autres éléments chauffants, soit de manière à être entouré par ces deux autres éléments chauffants, tel que le présente le deuxième mode de réalisation. Dans le premier mode de réalisation, l'élément chauffant allongé est ainsi le premier élément chauffant. Dans le deuxième mode de réalisation, l'élément chauffant allongé est ainsi le deuxième élément chauffant. L'élément chauffant allongé s'étend alors de préférence sur une hauteur similaire, ou sensiblement similaire, à celle de l'ensemble formé par les deux autres éléments chauffants, mis bout à bout. En particulier, l'élément chauffant allongé est caractérisé par un pas plus important que celui mesuré dans les éléments chauffants disposés dans le prolongement axial l'un de l'autre.

De façon similaire, quel que soit la configuration ou le mode de réalisation de la présente invention, le sens d'enroulement, horaire ou antihoraire, des portions enroulées des différents éléments chauffants, ne sera soumis à aucune limitation de combinaison. On entend par sens d'enroulement le sens du déplacement effectué lorsqu'on suit l'extension de la spire de la portion enroulée de l'un des éléments chauffants. Ainsi, l'ensemble des éléments chauffants pourra s'étendre selon un même sens d'enroulement, ou les éléments chauffants pourront être disposés selon des sens d'enroulement opposés.

Selon une caractéristique préférentielle de l'invention, chaque section terminale contribue d'une part à la fixation de l'élément chauffant dans le socle et d'autre part à la connexion électrique du corps de chauffe au système d'alimentation électrique. Particulièrement, la deuxième section terminale est rattachée à la portion enroulée par un coude, ce rattachement se faisant au niveau de la région distale, par rapport au socle, de la portion enroulée.

De préférence, la deuxième section terminale s'étend sur une longueur égale, ou sensiblement égale, à la distance séparant une extrémité distale par rapport au socle de la portion enroulée, du socle. La deuxième section terminale forme ainsi un bras plongeant de l'extrémité distale de la portion enroulée vers le socle. Ledit coude est, de préférence, agencé de manière à être disposé, par rapport à la première section terminale de l'élément chauffant, après un nombre de spires défini et une spire supplémentaire de 360° ajoutée d'un secteur angulaire en degrés égal à une valeur correspondant à ± 1.5 à 3R, R étant le rayon de l'élément chauffant, de manière à éviter tout encombrement ou contact entre les différentes sections terminales d'un même élément chauffant. Indépendamment du nombre d'élément chauffant composant le corps de chauffe, la deuxième portion terminale, pourra être disposée dans une zone centrale, délimitée par le diamètre de la surface intérieur du ou des éléments chauffants de diamètre inférieur. Alternativement, cette deuxième section terminale pourra d'étendre dans la zone annulaire intermédiaire, située entre des éléments chauffants de diamètres distincts.

Afin d'augmenter la puissance des dispositifs de chauffage électrique, il est aussi nécessaire d'augmenter l'échange thermique ayant lieu entre les éléments chauffants et le liquide circulant dans le dispositif. Une telle tâche peut s'avérer complexe puisqu'il faut aussi prévenir toute ébullition locale du liquide. En effet, lorsque le volume de la chambre est important, le liquide destiné à être chauffé par les éléments chauffants tend à stagner au niveau d'une zone centrale du corps de chauffe et le coefficient d'échange thermique s'en trouve réduit.

Afin de prévenir un tel inconvénient et d'augmenter les performances du dispositif de chauffage électrique, un noyau peut être disposé dans la zone centrale.

Selon une caractéristique préférentielle supplémentaire de la présente invention, le corps de chauffe pourra ainsi être équipé d'un noyau s'étendant dans la direction définie par l'axe d'enroulement d'un ou de plusieurs éléments chauffants, agencé de manière à ce que les différents éléments chauffants soient disposés autour dudit noyau. Ce noyau s'étend préférentiellement sur la hauteur des éléments chauffants et a pour but de combler la zone centrale.

L'ajout d'un noyau au sein du corps de chauffe permet d'une part de réduire le volume de liquide dans la chambre et d'autre part d'augmenter la perturbation de l'écoulement du liquide au sein de la chambre. Le coefficient d'échange thermique entre le liquide et le corps chauffant va ainsi être augmenté et les performances du dispositif optimisées.

D'autres caractéristiques, détails et avantages de l'invention ressortiront plus clairement à la lecture de la description détaillée donnée ci-après, et de plusieurs exemples de réalisation donnés à titre indicatif et non limitatif en référence aux dessins schématiques annexés, sur lesquels :
La figure 1 est une vue de côté du dispositif de chauffage électrique, lorsque son corps de chauffe comprend deux éléments chauffants ;
La figure 2 est une vue latérale du dispositif de chauffage électrique, lorsque son corps de chauffe comprend au moins trois éléments chauffants ;
La figure 3 est une représentation schématique d'un corps de chauffe comprenant deux éléments chauffants possibles pour la présente invention ;
La figure 4 est une représentation schématique d'un corps de chauffe comprenant trois éléments chauffants, agencés selon un premier mode de réalisation ;
La figure 5 est une représentation schématique d'un corps de chauffe comprenant trois éléments chauffants, agencés selon un deuxième mode de réalisation ;
La figure 6 est une coupe verticale d'un corps de chauffe comprenant trois éléments chauffants agencés selon un premier mode de réalisation, tel que présenté à la figure 2 ;
La figure 7 est une vue de dessus du corps de chauffe, lorsque celui-ci comprend un noyau ;

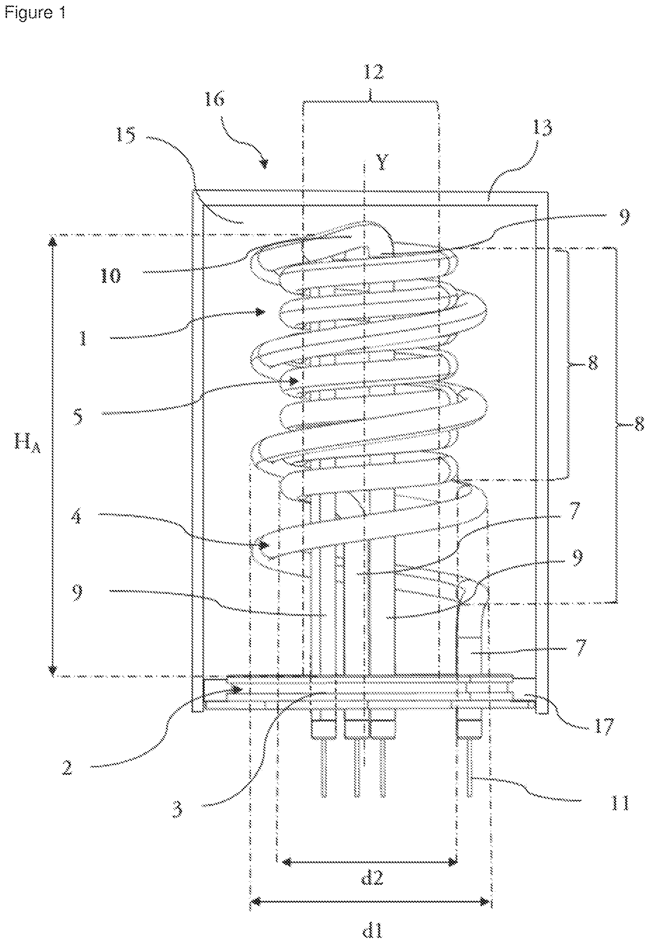

La figure 1 illustre schématiquement un dispositif de chauffage électrique 16, comprenant un socle 2, porteur d'au moins deux éléments chauffants 4 et 5, et sur lequel vient se fixer un boitier 13, délimitant ainsi une chambre 15 dans laquelle s'étendent les différents éléments chauffants 4 et 5. Le socle 2 et les éléments chauffants 4 et 5 forment l'ensemble appelé corps de chauffe 1. Afin d'assurer l'étanchéité de la chambre 15, un joint d'étanchéité 17 de forme annulaire est disposé à la base du corps de chauffe 1, dans une gorge de réception située entre le socle 2 et le boitier 13.

La figure 1 présente en particulier un dispositif de chauffage électrique 16 dont le corps de chauffe 1 est configuré pour comprendre deux éléments chauffants 4, 5 et montre l'agencement relatif des différents éléments chauffants 4,5 au sein du dispositif de chauffage électrique 16.

Chaque élément chauffant 4, 5 est inséré et fixé, de manière étanche, au niveau d'orifices 3 réalisés dans le socle 2, de sorte que le liquide circulant dans la chambre 15 ne puisse s'échapper. Lesdits éléments chauffants 4, 5, sont de forme tubulaire et sont composés d'une première section terminale 7, fixée au socle 2, se poursuivant par une portion enroulée 8, de forme hélicoïdale, dont l'hélice s'étend dans la direction définie par un axe Y, et se terminant par une deuxième section terminale 9. Chaque section terminale 7, 9 est équipée à son extrémité d'une cosse 11 permettant la connexion électrique du corps de chauffe 1 à l'alimentation électrique.

La figure 1 présente un corps de chauffe 1 dans lequel les deuxièmes sections terminales 9 de chaque élément chauffant 4, 5 s'étendent de manière rectiligne dans une zone centrale 12, délimitée par la surface intérieure de la portion enroulée du deuxième élément chauffant 5. Des alternatives à un tel agencement seront néanmoins évoquées par la suite.

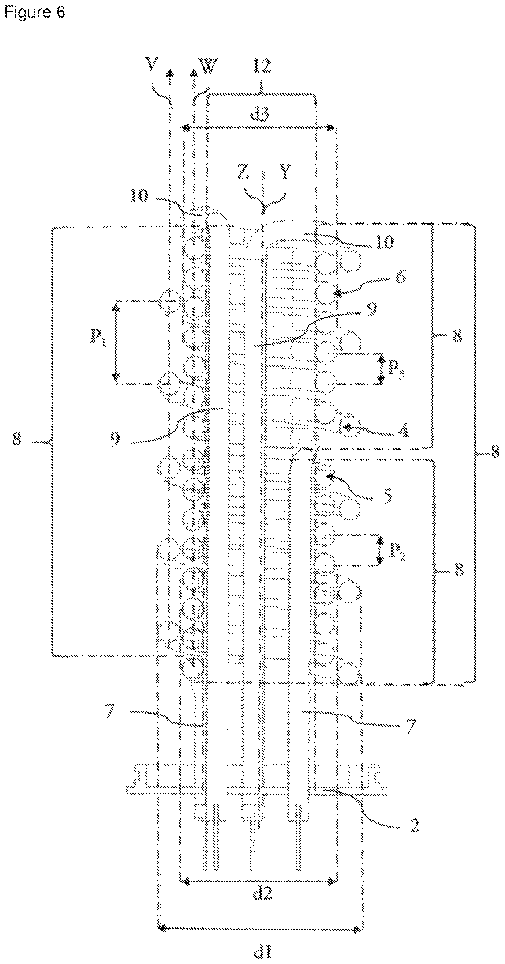

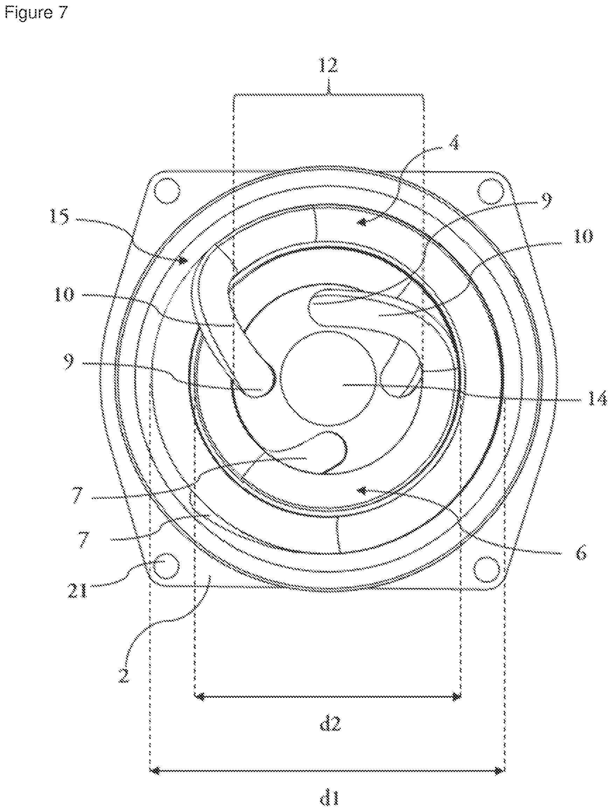

La deuxième section terminale 9 permet de joindre l'extrémité distale, par rapport au socle 2, de la portion enroulée 8 audit socle 2. En particulier, une zone de jonction entre l'extrémité distale de la portion enroulée 8 et la deuxième section terminale 9 forme un coude 10. L'agencement des différents coudes 10, ainsi que des premières et deuxièmes sections terminales 7, 9 de chaque élément chauffant 4, 5 est réalisé de manière à ce qu'il n'y ait pas de chevauchement ou de contact entre les différentes sections terminales 7, 9. Un tel agencement sera illustré plus en détails avec les figures 6 et 7.

Dans l'exemple présenté dans la figure 1, le corps de chauffe 1 est configuré de manière à inclure seulement deux éléments chauffants 4 et 5. Ledit corps de chauffe 1 comprend un premier élément chauffant 4, défini par un premier diamètre d1, agencé de manière à ce que ce premier élément chauffant 4 soit enroulé autour du deuxième élément chauffant 5, défini par un deuxième diamètre d2, inférieur au diamètre d1 du premier élément chauffant 4.

Les deux éléments chauffants 4, 5 pourront être agencés de manière à ce qu'ils soient concentriques, tel que l'illustre la figure 1. Les portions enroulées 8 des différents éléments chauffants 4, 5 sont alors enroulées autour d'un même axe Y. Ils s'étendent dans la chambre 15, sur une hauteur HA, égale ou sensiblement égale, mesurée selon ce même axe Y entre le socle et l'extrémité distale de la portion enroulée 8. L'agencement du premier et du second élément chauffant 4, 5 est défini de manière à ce que ces éléments chauffants distincts, n'entrent pas en contact l'un avec l'autre, que ce soit au niveau de leurs sections terminales propres 7 et 9 ou de leur portion enroulée 8.

Lorsqu'il est inséré dans le boitier 13, le corps de chauffe 1 est agencé de sorte que, dans un plan orthogonal à l'axe Y, les points de la surface extérieure de la portion enroulée 8 de chaque élément chauffant 4, 5 soit équidistants, ou sensiblement équidistants, d'une surface intérieure du boitier 13, définissant ainsi un espace de circulation du liquide dans la chambre 15. De la sorte, le liquide circule régulièrement à travers, autour et à l'intérieur du corps de chauffe 1, et monte en température, au contact des différents éléments chauffants 4 et 5.

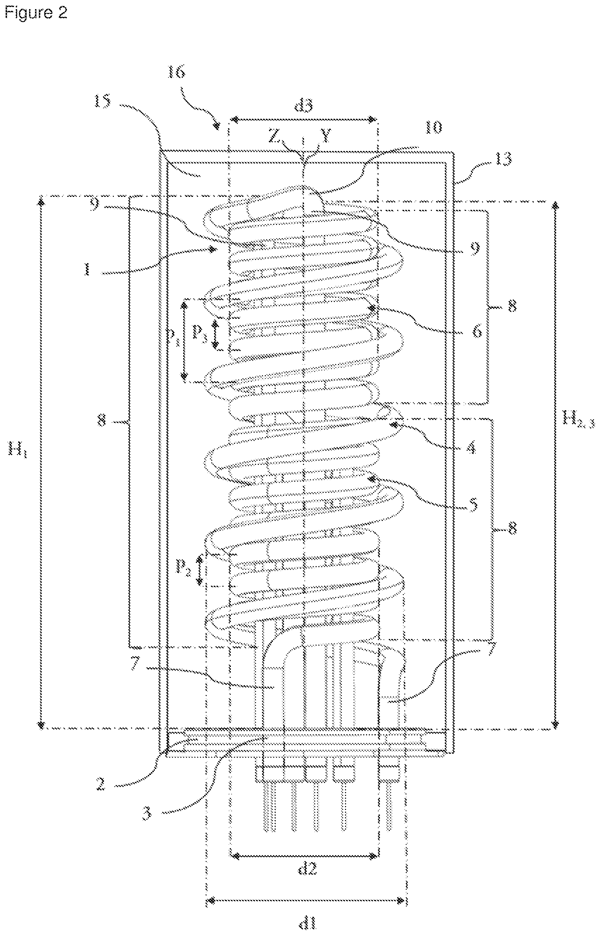

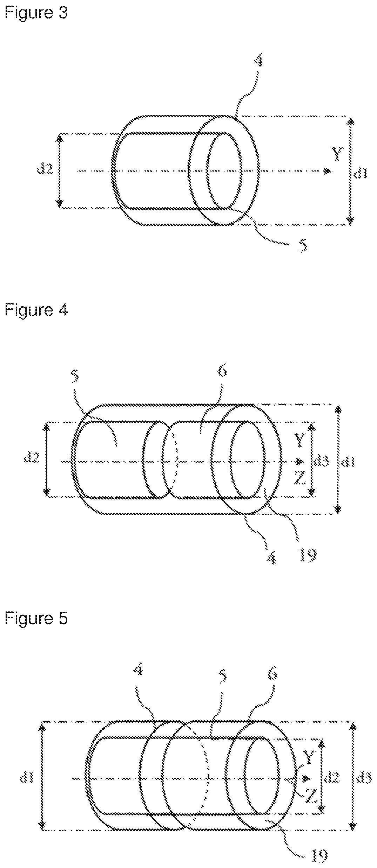

La figure 2, ainsi que la représentation schématique de la figure 4 présentent un corps de chauffe 1 comprenant trois éléments chauffants 4, 5 et 6, chacun de forme tubulaires et hélicoïdale, et montre l'agencement des différents éléments chauffants 4, 5, 6 selon un premier mode de réalisation. Un mode de réalisation alternatif est présenté de façon schématique à la figure 5.

Dans ce premier mode de réalisation illustré à la figure 2, le corps de chauffe 1 comprend le premier élément chauffant 4, défini par le premier diamètre d1, s'enroulant autour du deuxième élément chauffant 5, défini par le deuxième diamètre d2. Le corps de chauffe 1 comprend un troisième élément chauffant 6, défini par un troisième diamètre d3. Les différents éléments chauffants 4, 5, 6 sont agencés de sorte que ce premier élément chauffant 4, défini par un premier diamètre d1 supérieur à d2 et d1 supérieur à d3, s'enroule autour du deuxième et du troisième élément chauffant 5, 6. En particulier, et tel que représenté sur la figure 2, le troisième élément chauffant 6 est disposé en bout du deuxième élément chauffant 5 et ces deux éléments chauffants présente un axe d'enroulement commun Y, confondu avec l'axe d'enroulement Z du premier élément 4. Les deuxième et troisième éléments chauffants 5, 6 sont également définis par leurs diamètres d2 et d3 égaux.

Dans un tel agencement, les différents éléments chauffants 4, 5 et 6 sont à une distance non nulle les uns des autres. De plus, la surface extérieure de la portion enroulée 8 du deuxième ou du troisième élément chauffant 5, 6, et la surface intérieure de la portion enroulée 8 du premier élément chauffant 4, délimitent une zone annulaire intermédiaire 19, en forme d'anneau plus ou moins fin, dans laquelle le liquide vient circuler.

Les différents éléments chauffants 4, 5 et 6 s'étendent dans la chambre 15, délimitée par le boitier 13 et le socle 2, selon la direction définie par l'axe Y. Le premier élément chauffant 4 s'étend sur une hauteur H1, mesurée entre le socle 2 et l'extrémité distale de la portion enroulée 8 du premier élément 4, selon l'axe Y. Cette hauteur H1 est égale, ou sensiblement égale, à la hauteur H2,3, mesurée selon l'axe Y, entre le socle 2 et une extrémité distale d'une portion enroulée 8 du troisième élément chauffant 6. Cette hauteur H2,3 est la somme de la longueur des deuxième et troisième éléments chauffants 5 et 6, lorsqu'ils sont disposés bout à bout et mesurée le long de l'axe Y.

Comme précédemment évoqué pour un corps de chauffe 1 comprenant deux éléments chauffant 4, 5, l'ensemble de ces trois éléments chauffants 4, 5 et 6 est, de préférence, agencé de sorte que, dans un plan orthogonal à l'axe Y, les points d'une surface extérieure respective d'une portion enroulée 8 des différents éléments chauffants 4, 5, 6 soit équidistants, ou sensiblement équidistants, d'une surface intérieure du boitier 13, de manière à définir un espace de circulation du liquide dans la chambre 15 également réparti.

La portion enroulée 8 du premier élément 4, de diamètre d1, supérieur aux diamètres d2 et d3 des deuxième et troisième éléments chauffants 5 et 6, présente dans ce mode de réalisation un pas P1 plus grand que les pas P2 ou P3 observés dans les portion enroulée 8 du deuxième ou troisième élément chauffant 5, 6. Les deuxième et troisième éléments chauffants 5, 6 illustrés dans le corps de chauffe 1 de la figure 2 ont des pas P2 et P3 identiques. Une alternative dans laquelle ces pas diffèrent sera néanmoins envisageable.

Chaque élément chauffant 4, 5, 6, comprend un coude 10 s'étendant, selon un plan sensiblement perpendiculaire à l'axe d'enroulement Y, vers la zone centrale 12 délimitée par la surface intérieure des portions enroulées des deuxième et troisième éléments chauffants 5, 6. Le coude 10 du troisième élément chauffant est ainsi est agencé de manière à ce que la seconde section terminale 9 qui lui est rattachée puisse s'étendre de façon rectiligne dans la zone centrale 12, depuis la portion enroulée 8 jusqu'à un espace vacant du socle 2, de façon similaire à ce qui a précédemment été exposé pour les premier et deuxième éléments chauffants 4, 5.

Dans l'exemple représenté à la figure 6, les coudes 10 de chaque élément chauffant 4, 5 et 6 s'étendent vers la zone centrale 12, de sorte que les deuxièmes sections terminales 9 de chaque élément chauffant 4, 5, 6 s'étendent dans cette même zone centrale 12. Il sera néanmoins possible d'envisager des alternatives, dans lesquelles une ou plusieurs des deuxièmes sections terminales s'étendent dans la zone annulaire intermédiaire 19, située entre les différents éléments chauffants 4, 5, 6.

Cette coupe selon l'axe Y illustre une succession de spires verticalement alignées sur un axe V, appartenant au premier élément chauffant 4, suivie d'une succession de spire des deuxième et troisième élément chauffant 5, 6, alignés verticalement selon un axe W, distinct de l'axe V. La section de chaque élément chauffant 4, 5, 6 est identique, illustrant le fait qu'ils sont composés de brins résistifs de diamètre similaires, ou sensiblement similaires.

La figure 7 illustre, schématiquement, un corps de chauffe 1 comprenant un noyau 14 disposé au centre des différents éléments chauffants 4, 5, 6. Un tel noyau 14 peut être intégré à toutes les configurations et modes de réalisation du corps de chauffe 1 tels que précédemment décrits, quel que soit le nombre d'éléments chauffants le composant. Ce noyau 14 comble, au moins partiellement, la zone centrale 12 du corps de chauffe 1 et contribue ainsi à réduire le volume de la chambre 15, à augmenter la perturbation de l'écoulement du liquide caloporteur présent dans la chambre 15 et à accélérer la vitesse de déplacement du liquide au sein de cette chambre 15. La présence de ce noyau 14 améliore de ce fait les performances du corps de chauffe 1.

Le noyau 14 est disposé dans la zone centrale 12 et s'étend dans la direction définie par l'axe Y d'enroulement des différents éléments chauffant 4, 5, 6 dans la chambre 15. Ce noyau pourra être de hauteur variable et s'étend sur tout ou partie de la longueur de l'élément chauffant le plus long. On adoptera néanmoins, de préférence, un noyau de hauteur avoisinant la hauteur de l'ensemble de corps de chauffe 1 entourant ledit noyau 14, de manière à optimiser l'effet du noyau 14.

La figure 7 illustre aussi des moyens de fixation 21, intégrés dans le socle 2, qui permettront de fixer le dispositif de chauffage électrique de la présente invention au véhicule ou à un support de celui-ci.

On comprend à la lecture de ce qui précède que la présente invention propose un corps de chauffe destiné à un dispositif de chauffage électrique, ce corps de chauffe étant configuré pour réduire l'encombrement du dispositif de chauffage électrique, tout en conservant ou en augmentant ses performances thermiques. Ce corps de chauffe, destiné notamment à coopérer avec un appareil de chauffage et/ou de climatisation pour véhicule électrique ou hybride, voit ses dimensions optimisées du fait de l'agencement particulier des différents éléments chauffants. L'ajout d'un noyau, disposé au sein de ce corps de chauffe a également pour effet un gain en efficacité du transfert thermique s'effectuant entre les éléments chauffants et le liquide. L'efficacité du transfert d'énergie s'en voit augmentée, tandis que l'encombrement induit par le dispositif de chauffage électrique est réduit par rapport aux dispositifs de chauffage d'un fluide de l'art antérieur.

L'invention ne saurait toutefois se limiter aux moyens et configurations décrits et illustrés ici, et elle s'étend également à tout moyen ou configuration équivalents et à toute combinaison technique opérant de tels moyens. En particulier, le nombre d'éléments chauffants, le pas des portions enroulées desdits éléments chauffants, le diamètre desdits éléments chauffants peuvent être modifiés sans nuire à l'invention, dans la mesure où le dispositif de chauffage électrique pour véhicule, in fine, remplit les mêmes fonctionnalités que celles décrites dans ce document.

Il sera par exemple possible d'envisager une configuration dans laquelle une ou plusieurs des deuxièmes sections terminales des éléments chauffants s'étendent dans la zone annulaire intermédiaire, et non dans la zone centrale.

## Revendications

1. Corps de chauffe (1) pour dispositif de chauffage électrique (16) de liquide, ledit corps de chauffe (1) comprenant au moins un premier élément chauffant (4) de forme hélicoïdale et défini par un diamètre, appelé premier diamètre (d1), un deuxième élément chauffant (5) de forme hélicoïdale défini par un diamètre, appelé deuxième diamètre (d2), et un socle (2), porteur du premier élément chauffant (4) et du deuxième élément chauffant (5), le premier diamètre (d1) étant supérieur au deuxième diamètre (d2) et le premier élément chauffant (4) étant disposé autour du deuxième élément chauffant (5), le premier élément chauffant (4) et/ou le deuxième élément chauffant (5) comprenant une première section terminale (7), suivie d'une portion enroulée (8), suivie d'une deuxième section terminale (9) rectiligne, la première section terminale (7) et la deuxième section terminale (9) s'étendant entre la portion enroulée (8) et le socle (2), **caractérisé en ce que** la deuxième section terminale (9) d'au moins un des éléments chauffants (4, 5) s'étend vers le socle (2) à l'intérieur de la portion enroulée (8) d'au moins un élément chauffant.

2. Corps de chauffe (1) selon la revendication précédente, dans lequel un axe d'enroulement Y du premier élément chauffant (4) est confondu avec un axe d'enroulement Z du deuxième élément chauffant (5).

3. Corps de chauffe (1) selon l'une quelconque des revendications précédentes comprenant au moins un troisième élément chauffant (6), de forme hélicoïdale et défini par un diamètre, appelé troisième diamètre (d3), le premier élément chauffant (4) étant disposé autour du troisième élément chauffant (6).

4. Corps de chauffe (1) selon la revendication précédente, dans lequel le troisième élément chauffant (6) est disposé dans le prolongement axial du deuxième élément chauffant (5), et en ce que le deuxième élément chauffant (5) et le troisième élément chauffant (6) s'enroulent autour d'un axe commun Y.

5. Corps de chauffe (1) selon l'une quelconque des revendications 1 ou 2, comprenant au moins un troisième élément chauffant (6), de forme hélicoïdale et défini par un diamètre, appelé troisième diamètre (d3), le premier élément chauffant (4) et le troisième élément chauffant (6) étant disposés autour du deuxième élément chauffant (5).

6. Corps de chauffe (1) selon la revendication précédente, dans lequel le troisième élément chauffant (6) est disposé dans le prolongement axial du premier élément chauffant (4), de manière à ce que le premier élément chauffant (4) et le troisième élément chauffant (6) s'enroulent autour d'un axe commun Y.

7. Corps de chauffe (1) selon l'une quelconque des revendications 2 à 6, comprenant un noyau (14) s'étendant dans la direction définie par un axe d'enroulement Y des différents éléments chauffants, agencé de manière à ce que les différents éléments chauffants soient disposés autour dudit noyau (14).

8. Dispositif de chauffage électrique (16) comprenant un corps de chauffe (1) selon l'une quelconque des revendications précédentes et un boitier (13) fixé au socle (2), le corps de chauffe (1) et le boitier (13) délimitant une chambre (15) dans laquelle s'étendent les différents éléments chauffants (4, 5, 6).

## Patentansprüche

1. Heizkörper (1) für eine Vorrichtung zur elektrischen Erhitzung (16) einer Flüssigkeit, wobei der Heizkörper (1) mindestens ein erstes gewendeltes und durch einen Durchmesser, erster Durchmesser (d1) genannt, definiertes Heizelement (4), ein zweites gewendeltes, durch einen Durchmesser, zweiter Durchmesser (d2) genannt, definiertes Heizelement (5) und einen Sockel (2), der das erste Heizelement (4) und das zweite Heizelement (5) trägt, umfasst, wobei der erste Durchmesser (d1) größer als der zweite Durchmesser (d2) ist und wobei das erste Heizelement (4) um das zweite Heizelement (5) herum angeordnet ist, wobei das erste Heizelement (4) und/oder das zweite Heizelement (5) einen ersten Endabschnitt (7) umfasst, auf den ein gewundener Bereich (8) folgt, auf den ein zweiter gerader Endabschnitt (9) folgt, wobei sich der erste Endabschnitt (7) und der zweite Endabschnitt (9) zwischen dem gewundenen Bereich (8) und dem Sockel (2) erstrecken, **dadurch gekennzeichnet, dass** sich der zweite Endabschnitt (9) mindestens eines der Heizelemente (4, 5) zum Sockel (2) hin innerhalb des gewundenen Bereichs (8) mindestens eines Heizelements erstreckt.

2. Heizkörper (1) nach dem vorhergehenden Anspruch, bei dem eine Windungsachse Y des ersten Heizelements (4) mit einer Windungsachse Z des zweiten Heizelements (5) zusammenfällt.

3. Heizelement (1) nach einem der vorhergehenden Ansprüche, umfassend mindestens ein drittes gewendeltes und durch einen Durchmesser, dritter Durchmesser (d3) genannt, definiertes Heizelement (6), wobei das erste Heizelement (4) um das dritte Heizelement (6) herum angeordnet ist.

4. Heizkörper (1) nach dem vorhergehenden Anspruch, bei dem das dritte Heizelement (6) in der axialen Verlängerung des zweiten Heizelements (5) angeordnet ist, und das zweite Heizelement (5) und das dritte Heizelement (6) um eine gemeinsame Achse Y gewunden sind.

5. Heizkörper (1) nach einem der Ansprüche 1 oder 2, umfassend mindestens ein drittes gewendeltes und durch einen Durchmesser, dritter Durchmesser (d3) genannt, definiertes Heizelement (6), wobei das erste Heizelement (4) und das dritte Heizelement (6) um das zweite Heizelement (5) herum angeordnet ist.

6. Heizkörper (1) nach dem vorhergehenden Anspruch, bei dem das dritte Heizelement (6) in der axialen Verlängerung des ersten Heizelements (4) angeordnet ist, so dass das erste Heizelement (4) und das dritte Heizelement (6) um eine gemeinsame Achse Y gewunden sind.

7. Heizkörper (1) nach einem der Ansprüche 2 bis 6, der einen Kern (14) umfasst, der sich in die durch eine Windungsachse Y der verschiedenen Heizelemente definierte Richtung erstreckt, und der so gestaltet ist, dass die verschiedenen Heizelemente um den Kern (14) herum angeordnet sind.

8. Vorrichtung zur elektrischen Erhitzung (16), umfassend einen Heizkörper (1) nach einem der vorhergehenden Ansprüche und ein Gehäuse (13), das an dem Sockel (2) befestigt ist, wobei der Heizkörper (1) und das Gehäuse (13) eine Kammer (15) begrenzen, in der sich die verschiedenen Heizelemente (4, 5, 6) erstrecken.

## Claims

1. Heating body (1) for an electric liquid-heating device (16), said heating body (1) comprising at least a first heating element (4) of helical shape and defined by a diameter called the first diameter (d1), a second heating element (5) of helical shape defined by a diameter called the second diameter (d2), and a base (2) bearing the first heating element (4) and the second heating element (5), the first diameter (d1) being larger than the second diameter (d2) and the first heating element (4) being disposed around the second heating element (5), the first heating element (4) and/or the second heating element (5) comprising a first terminal section (7), followed by a wound portion (8), followed by a second, rectilinear terminal section (9), the first terminal section (7) and the second terminal section (9) extending between the wound portion (8) and the base (2), **characterized in that** the second terminal section (9) of at least one of the heating elements (4, 5) extends toward the base (2) inside the wound portion (8) of at least one heating element.

2. Heating body (1) according to the preceding claim, in which a winding axis Y of the first heating element (4) is coincident with a winding axis Z of the second heating element (5).

3. Heating body (1) according to either one of the preceding claims, comprising at least one third heating element (6), of helical shape and defined by a diameter called the third diameter (d3), the first heating element (4) being disposed around the third heating element (6).

4. Heating body (1) according to the preceding claim, in which the third heating element (6) is disposed in the axial extension of the second heating element (5), and in which the second heating element (5) and the third heating element (6) are wound around a common axis Y.

5. Heating body (1) according to either one of Claims 1 and 2, comprising at least one third heating element (6), of helical shape and defined by a diameter called the third diameter (d3), the first heating element (4) and the third heating element (6) being disposed around the second heating element (5).

6. Heating body (1) according to the preceding claim, in which the third heating element (6) is disposed in the axial extension of the first heating element (4), such that the first heating element (4) and the third heating element (6) are wound around a common axis Y.

7. Heating body (1) according to any one of Claims 2 to 6, comprising a core (14) extending in the direction defined by a winding axis Y of the various heating elements, arranged such that the various heating elements are disposed around said core (14).

8. Electric heating device (16) comprising a heating body (1) according to any one of the preceding claims and a housing (13) fastened to the base (2), the heating body (1) and the housing (13) delimiting a chamber (15) in which the various heating elements (4, 5, 6) extend.
